# EUROPEAN PATENT SPECIFICATION

(11) **EP 1 586 624 B1**
(45) Date of publication and mention of the grant of the patent: **03.04.2013**
(21) Application number: 05250607.8
(22) Date of filing: 03.02.2005
(51) Int. Cl.: C11B 13/00

(54) **Process of refinement of crude tall oil using short path distillation**
Verfahren zur Raffination von Tallöl mittels Kurzwegdestillation
Procédé pour l'affination de tallol à l'aide de la distillation à trajet court

(30) Priority: 06.02.2004 CL 2062004
(43) Date of publication of application: 19.10.2005
(73) Proprietor: Härting Glade, Thomas Francis, Santiago (CL)
(72) Inventor: Rojas, Alejandro Markovits, Moltalva 6000, Santiago (CL); Markovits Schersl, Andres, 6000 Santiago (CL); Fuenzalida Diaz, Miguel Angel, 6000 Santiago (CL)
(74) Representative: Spencer, Michael David

(56) References cited:
- US-A- 2 530 809
- US-A- 3 926 936
- US-A- 4 076 700
- US-A- 4 151 160
- US-A- 4 422 966
- US-A1- 2001 007 906

## Description

The present invention is related to a process for obtaining a high quality mixture of fatty and rosin acids from crude tall oil through short path distillation of saponified tall oil. The present invention is also related to a process for obtaining high quality fatty and rosin acids from crude tall oil through short path distillation of saponified crude tall oil.

Tall oil is obtained through acidulation of black liquor soaps, which in turn are by-products of the Kraft pulping of wood for obtaining cellulose. This process consists of the digestion of wood chips at high temperature and pressure in diluted alkaline liquor containing sodium hydroxide and sodium sulphide as active ingredients. The digestion disrupts the cellular structure and causes the dissolution of lignin, other chemical products contained in the wood and hemicellulose. The cellulose fibre dispersed in the spent liquor from the digestion is isolated by filtration. The Spent liquor, known as black liquor, is further evaporated and calcinated for the recovery of salts and alkalis, which return to the Kraft pulping process. This operation is performed by feeding the black liquor through a series of multi-effect evaporators. After several stages of evaporation and when the concentration of solids is around 30%, a portion of the solids, known as black liquor soaps, becomes insoluble. At these conditions, the black liquor is transferred to skimming tanks where the black liquor soaps are separated on the upper part of the tank where they are isolated or skimmed out and recovered. The skimmed consists of a mixture of pasty matter with' a water content between 30 and 50%.

Black liquor soaps are mainly composed by fatty and rosin acid soaps and unsaponifiable matter and minor amounts of partially soluble inorganic sodium salts, lignin, mercaptans, polysulphides, compounds that provide the dark colour and suspended fibres occasionally.

Typically, black liquor soaps are transformed into crude tall oil, which in turn can be processed, for example using distillation to produce different fractions of distilled tall oil.

The first step for transforming black liquor soaps consists on reacting them with sulphuric acid, which convert them into their respective free acids (fatty and rosin acids). The result of the acidulation is generally separated in three phases. The upper layer is called crude tall oil (CTO), and its main components are fatty and rosin acids, unsaponifiable matter, esters and some suspended solids and water. The second layer or middle layer contains most of the lignin and insoluble solids originally present in black liquor soaps. The lower layer or brine is fundamentally composed of water and sodium sulphate. Crude tall oil can be commercialized as such or refined using fractionated distillation. In the present invention, unsaponifiable matter is defined as the compounds present in crude tall oil which can not be saponified.

Crude tall oil is characterized by its acid number and saponification index. The acid number expresses the milligrams of KOH required to neutralize one gram of crude tall oil and the saponification index, the milligrams of KOH required to saponify one gram of crude tall oil. Table 1 shows typical values of acid number and saponification index in crude tall oil. In general, the lower the acid number, the lower the content of fatty and rosin acids, and therefore, the higher the content of unsaponifiable matter in crude tall oil.

**Table 1: Typical values of acid number and saponification index in crude tall oil samples**

| | **Acid number mg KOH/g CTO** | **Saponification index mg KOH/g CTO** |
|---|---|---|
| **Southeast U.S.A.** | 165 | 172 |
| **North U.S.A. and Canada** | 135 | 166 |
| **Scandinavia** | 132 | 142 |
| **Chile** | 148 | 161 |

Crude tall oil is a dark-brown, cloud and distinctive odour liquid. Multiple compounds such as pinosylvindimethyl ether provide the dark colour. A colour measurement used in the industry of tall oil by-products is the Gardner colour scale. The distinctive odour is due in part to the presence of sulphur products as organic polysulphides.

Crude tall oil has few direct applications mainly because it is a complex and variable mixture. In addition, the applicability of crude tall oil is even more limited because of the content of unsaponifiable matter, colour and distinctive odour. Thus one of its main uses is as alternative fuel.

In the industry, crude tall oil is processed by vacuum distillations to recover fractions of fatty acids or TOFA (Tall Oil Fatty Acids) and rosin acids or TORA (Tall Oil Rosin Acids) of higher purity. Nevertheless, direct distillation of crude tall oil has the disadvantage that the unsaponifiable matter distils along with the fatty and rosin acids fractions. This situation forces the use of multiple distillation stages and high reflux rates in the distillation columns with a high impact in capital inversion and operation costs. In turn, multiple distillation stages cause thermal decomposition of tall oil compounds, affecting performance, purity and colour of the final products.

Finally, the presence of unsaponifiable matter generates multiple side stream in the fractionation process of crude tall oil; for example, tall oil heads, mainly composed by fatty acids and unsaponifiable matter, distilled tall oil or DTO, a mixture of fatty and rosin acids and unsaponifiable matter, and tall oil pitch mainly composed by rosin acids and esters from the reaction of fatty and rosin acids with unsaponifiable matter. Therefore, an important amount of fatty and rosin acids are lost in the side streams, which negatively affect the recovery performances. In addition, the purified fractions of TOFA and TORA are unsatisfactory in applications where odourless, colourless and highly pure materials are required. Generally, in the TOFA industry, one or more distillations are required in order to obtain acceptable levels of purity and colour, which, however, in many cases are not enough to compete with fatty acids from other origin.

Consequently, in order to obtain better quality fatty acids or rosin acids, the efforts made by the tall oil industry have been focused on developing techniques of unsaponifiable matter separation; although there are not processes known in the state of the art that satisfactorily solve this problem so far.

The interest on developing refining processes of CTO has recently increased due to many applications that have been found for the different components of the unsaponifiable matter of CTO. Thus, there are multiple refining processes of tall oil using solvent extraction. US-A-2001/007906 (Huibers et al.) discloses a method for separating a sterol or sterol ester from crude tall oil comprising fractionating the crude tall oil into a reside fraction and a volatile fraction. US-A-2530809 (Christenson et al.) discloses a process of obtaining the unsaponifiable matter of tall oil in concentrated form. Harada et a1. discuss the disadvantages of these techniques in US patent N°3,887,537.

Harada et al. in US patent N°4,076,700 disclose a process for recovering fatty and/or rosin acids from black liquor soap without using solvent extraction of the unsaponifiable matter. In the disclosed process, black liquor soaps with water content of around 40% are firstly fed to a saponification reactor where an alkaline solution is added. Then, soaps from the reactor with a water content of around 50% are fed to a thin film evaporator where the distance or clearance between the blade scraper and the evaporating surface is very short, lesser than 1 mm, at pressure between 1.33 and 6.67 kPa (10 and 50 mmHg). The reason for using such close blade scrapers, practically in contact with the surface, is due to the strong decompression of the black liquor soap solution and the strong foaming of the black liquor soap solution at the operation pressure that cause the solidification of the black liquor soaps on the surface of the evaporator. Therefore, the only efficient way for removing them is to use highly near to the surface blade scrapers. On the other hand, it is not possible to increase the temperature excessively in order to keep the black liquor soaps melted because of the thermal degradation of black liquor soaps. According to the inventors, it must be used the lowest pressure possible which in the case of a thin film evaporator is not lower than a few mmHg, and temperatures over the melting point of black liquor soaps at the operation pressure. In the thin film evaporator, water and light unsaponifiable matter of black liquor soaps are removed at 230°C and a pressure between 1.33 and 6.67 kPa (10 and 50 mmHg). Then, melted black liquor soaps are fed to a second thin film evaporator where unsaponifiable matter is distilled. For this, the pressure in the evaporator must be the lowest as possible in order to evaporate the unsaponifiable matter at low temperature with the aim of avoiding thermal decomposition of black liquor soaps. Then the soaps without unsaponifiable matter are acidulated to transform them into refined tall oil, which is distilled according to known processes to produce TORA and TOFA. The disclosed process in US patent N°4,076,700 provides a TORA and TOFA product with an unsaponifiable matter higher than 2%.

The disclosed process has many drawbacks and is inefficient to remove unsaponifiable matter entirely from black liquor soaps, affecting production performance and quality of TORA and TOFA products. Firstly, the high water content of black liquor soap and then the product from the saponification stage which fed the first thin film evaporator, cause an excessive foaming which obstructs the drying operation of black liquor soap and forces the use of a very large evaporation area. In addition, operation pressure in the evaporator is lower than 6.67 kPa (50 mmHg), which increases flashing and foaming problems. Along with this, the flashing soap commonly reaches the condenser, blocking it due to its high melting point and the relative low temperature of the condensing fluid.

Furthermore, 38°C or lower temperature is required in the condensing fluid to condense the evaporated water at 6.67 kPa (50 mmHg). However, light unsaponifiable matter has a melting point higher than 35°C, then, for this reason, it is inefficient to condense water along with light unsaponifiable matter, generating high vapour loads to the vacuum system and frequent accumulations of solidified unsaponifiable matter in the condenser, which affect continuity and productivity of the process.

The strong flash effect in the first thin film evaporator produces solidification of soaps; therefore, their removal requires blade scrapers located closely to the surface, practically in contact with them, which implies the use of high torque engines, high energy consumption and abrasion-resistant materials, which has a negative impact on maintenance and operation of thin film evaporators.

On the other hand, given the limitations to reach low pressures in thin film evaporators due to the distance between the external condenser and the evaporation surface, nominal pressure of operations is not lower than 0.13 kPa (1 mmHg). Therefore, in order to evaporate unsaponifiable matter in an efficient way, high temperatures are needed which cause quick thermal degradation of fatty or rosin acid salts. Accordingly, lower temperatures are required to operate and, therefore an incomplete removal of the unsaponifiable matter, which explains why the process disclosed by Harada *et al*. provides TORA and TOFA products with unsaponifiable matter content higher than 2%.

The process in the present invention does not have any of the drawbacks of the processes disclosed so far. and rosin acids or extracted tall oil (ETO) with an unsaponifiable matter content lower than 2%.

The third objective of the present invention is to provide an efficient process to produce highly pure fatty and rosin acids with an unsaponifiable matter content lower than 2%.

According to the present invention, crude tall oil is saponified in a reactor to produce saponified tall oil with low water content. The reaction is carried out by contacting crude tall oil with an alkali solution, preferably sodium hydroxide or potassium hydroxide, at a temperature between 80°C and 200°C, in agitated reactors at pressure between 1 and 15 atm. The required amount of alkali is obtained from the saponification index of crude tall oil. Generally, a small amount is used (lower than 5%) over the stoichiometric value given by the saponification index. The acid number of crude tall oil and the water content of alkali solution provide the water content in the saponified tall oil. For the objectives of the present invention, it is convenient to decrease the water content of saponified tall oil. For this, alkali-saturated solutions or mixtures of alkali-saturated solutions and solid alkali are used. In this way, saponified tall oil has a water content lower than 20%, preferably lower than 15%.

Next, saponified tall oil is dried or dehydrated by feeding it to an evaporator, preferably a short path evaporator, which works at pressure between 20 and 200 kPa (150 and 1500 mmHg), preferably at atmospheric pressure, and at temperature higher than 100°C to produce a distillate comprising water and light unsaponifiable matter, and a residue comprising dehydrated saponified tall oil with a water content lower than 3%, preferably lower than 1%.

According to the disclosed drying process of saponified tall oil in the present invention, water can be evaporated avoiding flashing, foaming and splashing problems known in the state of the art. Furthermore, the drying process at a pressure close to atmospheric allows the temperature set up of the condensation fluid in order to condense water efficiently and to maintain the condensed unsaponifiable matter in a fluid state. The condenser temperature work range is between 20 and 120°C, preferably over 50°C.

Due to the fluidity of saponified tall oil descends as water content decreases, it is convenient to provide more than one thermal level area to the evaporator used in the drying process of saponified tall oil. This is done by using independent jackets along the evaporator, which allows gradual heating of saponified tall oil until a temperature slightly over the fusion point is fluidly reached, diminishing thermal degradation of saponified tall oil.

Preferably, dehydrated saponified tall oil is further processed through an expansion stage by feeding it to an expansion system where the pressure is reduced to a value lower than 3.33 kPa (25 mmHg) and at a temperature higher than the melting point of dehydrated saponified tall oil. This system may be a jacketed tank or an evaporator, whose heating surface works at temperatures between 200 and 350°C and condensation surface operates at temperatures between 50 and 140°C. The condensate comprising mainly unsaponifiable matter is collected through the condenser, and a residue is collected through the bottom.

Then, dehydrated saponified tall oil or the residue from the expansion stage of the drying stage is fed to a high-vacuum short path evaporator, which operates at a pressure lower than 0.13 kPa (1 mmHg), preferably 0.013 kPa (0.1 mmHg), a temperature of the evaporation surface between 240 and 380°C and a temperature of the condensation surface between 70 and 180°C. In a short path evaporator, it is possible to work at pressures as low as 0.00013 kPa (0.001 mmHg) because pressure drop between the evaporator and the condenser is very low due to the close distance between the evaporator and the condenser. Because reachable pressures are very low in a short path evaporator, it is possible to remove unsaponifiable matter efficiently and at temperatures that minimize thermal decomposition of saponified tall oil. Therefore, the problem of high content of unsaponifiable matter that distils along with TORA and TOFA from the process disclosed by Harada et al. is solved. Thus, a condensate comprising unsaponifiable matter is collected through the condenser and a residue or refined saponified tall oil free of unsaponifiable matter that distils along with fatty and rosin acids is recovered through the bottom.

The refined saponified tall oil is mixed with water and acidulated with mineral acids, such as sulphuric acid, to produce a mixture that is separated in two phases. An oily phase is obtained, which comprises fatty and rosin acids, and it is characterized by a low content of unsaponifiable matter; also an aqueous phase or brine composed by an aqueous solution of sodium sulphate is obtained. This brine may be conveniently recycled to the mixing stage of refined saponified tall oil with water. It can be also recycled to the acidulation stage.

Then, oily phase is dehydrated in conventional evaporation systems, preferably at reduced pressures and temperature over 80°C to collect water of the oily phase through the condenser and a residue through the bottom comprising refined tall oil or RTO free of unsaponifiable matter that distils along with fatty and rosin acids. Typically, RTO contains a percentage of unsaponifiable matter equal to or lower than the initial percentage of the unsaponifiable matter in crude tall oil and these unsaponifiable matter fraction has a vapour pressure substantially lower than fatty and rosin acids, allowing an further easy separation through distillation.

Refined tall oil can be directly used in industrial applications in detergents, surfactants and chemicals for mining, among others.

Refined tall oil produced through the described invention is distilled in a short path evaporator or thin film evaporator at reduced pressure, lower than 13.33 kPa (100 mmHg), preferably lower than 3.33 kPa (25 mmHg), and at temperatures of the evaporation surface between 160 and 300°C, preferably between 200 and 250°C, and at temperatures of the condensation surface between 60 and 140°C, preferably 80 and 120°C, to collect a residue or pitch containing unsaponifiable matter through the bottom and a highly pure mixture of fatty and rosin acids or extracted tall oil (ETO) through the condenser with an unsaponifiable matter percentage less than 2%.

In order to achieve the objective of the present invention, RTO or ETO produced through the invented process is fed to a distillation system to obtain high quality fatty and rosin acids. The distillation process of RTO or ETO may be carried out in the distillation systems described in the state of art, by means of the use of falling film evaporators, short path evaporators along with packed fractionation columns at reduced pressure with or without steam and, generally, the same systems and processes used for fractionating CTO. US patents N°2,716,630, N°2,724,709, N°2,866,492, N°2,894,880 and N°3,644,179 describe processes that may be used for fractionating RTO or ETO.

The processes for obtaining fatty and rosin acids from the distillation of RTO or ETO have more efficiency and higher performance because they need less theoretical distillation stages, shorter distillation times, lesser reflux ratios and they generate lesser thermal degradation and lower volume of side streams with the consequent better quality products and higher performances in comparison with conventional distillation of CTO as is shown in example 2.

The processes of the present invention are further described in reference of the accompanying figures:

The diagram of Figure 1 describes the process for obtaining refined tall oil or RTO from crude tall oil. The diagram of Figure 2 describes the process for obtaining extracted tall oil from crude tall oil. The diagram of Figure 3 describes the process for obtaining highly pure fatty and rosin acids from crude tall oil.

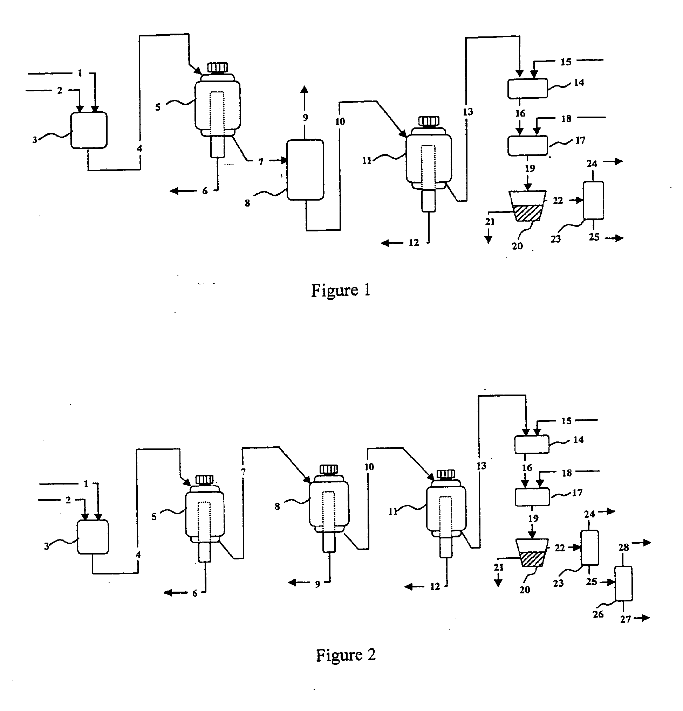

In Figure **1****,** crude tall oil is fed to a saponification reactor **3** via line **1,** to which a stream of a solution of sodium hydroxide in a equivalent proportion to the saponification index or in excess up to 20% is fed via line **2.** Reactor **3** works at a temperature between 80 and 200°C under agitation, and at pressure between 1 and 15 atm to generate saponified tall oil. This saponified tall oil is fed to a short path evaporator **5** via line **4,** which operates at a pressure between 20 and 200 kPa (150 and 1500 mmHg), preferably between 80 and 106 kPa (600 and 800 mmHg) and at a temperature between 100 and 300°C, to recover a condensate comprising water and unsaponifiable matter via line **6.** The residue from the short path evaporator **5** is fed to an expansion tank **8** via line **7,** which works at a pressure between 0.13 and 6.67 kPa (1 and 50 mmHg) and at temperature between 200 and 350°C, to recover a condensate comprising mainly unsaponifiable matter via line **9** and a second residue through the bottom. The second residue is fed to a second short path evaporator **11** via line **10,** which works at a pressure lower than 0.013 kPa (1 mmHg) and at temperature higher than 240°C, to recover a condensate comprising unsaponifiable matter via line **12** and a residue comprising refined saponified tall oil through the bottom. The refined saponified tall oil is fed to the diluter **14** via line **13,** to which a water stream is fed via line **15** to form an aqueous solution of refined saponified tall oil with a solid content between 20 and 80%. The aqueous solution of refined saponified tall oil is fed via line **16** to the acidulation reactor **17,** to which a sulphuric acid stream is fed via line **18.** The acidulation reactor **17** operates at a temperature between 50 and 150°C to produce an immiscible mixture, which is then fed via line **19** to a decanter tank **20** where the phases are separated. The lower phase mainly comprising an aqueous solution of sodium sulphate brine is separated via line **21.** Via line **22,** the upper phase or oily phase is separated and fed to dehydrating system **23** to recover an aqueous current via line **24** and a dehydrated oily phase via line **25** or refined tall oil or RTO.

In Figure 2, crude tall oil is fed to a saponification reactor **3** via line **1,** to which a stream of a solution of sodium hydroxide in a equivalent proportion to the saponification index or in excess up to 20% is fed via line **2.** Reactor **3** works at a temperature between 80 and 200°C under agitation, and at pressure between 1 and 15 atm to generate saponified tall oil. This saponified tall oil is fed to a short path evaporator **5** via line **4,** which operates at a pressure between 20 and 200 kPa (150 and 1500 mmHg), preferably between 80 and 106 kPa (600 and 800 mmHg) and at a temperature between 100 and 300°C, to recover a condensate comprising water and unsaponifiable matter via line **6.** The residue from the short path evaporator **5** is fed to a second short path evaporator **8** via line **7**, which works at a pressure between 0.13 and 6.67 kPa (1 and 50 mmHg) and at temperature between 200 and 350°C, to recover a condensate mainly comprising unsaponifiable matter via line **9** and a second residue through the bottom. The second residue is fed to a third short path evaporator 11 via line **10,** which operates at a pressure lower than 0.13 kPa (1 mmHg) and at a temperature higher than 240°C, to recover a condensate comprising unsaponifiable matter via line **12** and residue comprising refined saponified tall oil through the bottom. The refined saponified tall oil is fed via line **13** to the diluter **14,** to which a stream of water is fed via line **15** to form an aqueous solution of refined saponified tall oil with a solid content between 20 and 80%. The aqueous solution of refined saponified tall oil is fed to the acidulation reactor **17** via line **16,** to which a sulphuric acid stream is fed via line **18.** The acidulation reactor **17** operates at a temperature between 50 and 150°C to produce an immiscible mixture, which then is fed via line **19** to the decanter tank **20** where the phases are separated. The lower phase mainly comprising a solution of sodium sulphate or brine is separated via line **21.** Via line **22,** the upper phase or oily phase is separated and fed to a dehydrating system **23** to recover an aqueous stream via line **24** and a dehydrated oily phase or RTO via line **25**, which is fed to the short path evaporator **26** to recover a residue via line **27** and distillate via line **28** or extracted tall oil or ETO.

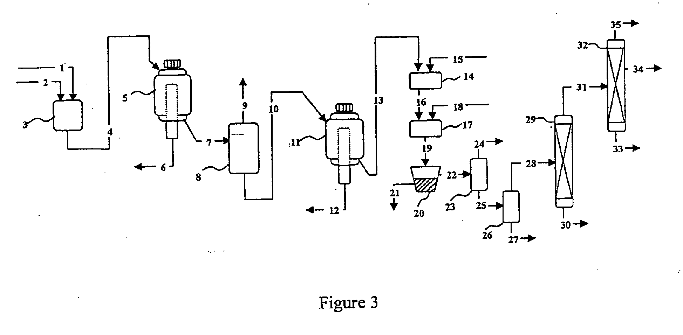

In Figure **3****,** crude tall oil is fed to a saponification reactor **3** via line **1**, to which a stream of a solution of sodium hydroxide in a equivalent proportion to the saponification index or in excess up to 20% is fed via line **2.** Reactor **3** works at a temperature between 80 and 200°C under agitation, and at pressure between 1 and 15 atm to generate saponified tall oil. This saponified tall oil is fed to a short path evaporator **5** via line **4**, which operates at a pressure between 20 and 200 kPa (150 and 1500 mmHg), preferably between 80 and 106 kPa (600 and 800 mmHg) and at a temperature between 100 and 300°C, to recover a condensate comprising water and unsaponifiable matter via line **6.** The residue from the short path evaporator **5** is fed to an expansion tank **8** via line **7,** which operates at a pressure between 0.13 and 6.67 kPa (1 and 50 mmHg) and a temperature between 200 and 350°C, to recover a condensate mainly comprising unsaponifiable matter via line **9** and a residue via line **10**, which is fed to a second short path evaporator **11**, which operates at a pressure lower than 0.13 kPa (1 mmHg) and a temperatures higher than 240°C, to recover condensate comprising mainly unsaponifiable matter via line **12** and residue comprising refined saponified tall oil through the bottom. Refined saponified tall oil is fed via line **13** to the diluter **14**, to which a stream of water is fed via line **15** to form an aqueous solution of refined saponified tall oil with a solid content between 20 and 80%. The aqueous solution of refined saponified tall oil is fed to the acidulation reactor **17** via line **16,** to which a sulphuric acid stream is fed via line **18.** The acidulation reactor **17** operates at a temperature between 50 and 150°C to produce an immiscible mixture, which is fed via line **19** to the decanter tank **20,** where the phases are separated. The lower phase mainly comprising a solution of sodium sulphate or brine is separated via line **21.** Via line **22**, the upper phase or oily phase is separated and fed to dehydrating system **23** to recover an aqueous stream via line **24** and a dehydrated oily phase via line **25**, which is fed to the thin film evaporator or falling film evaporator **26**, which works at reduced pressure and at a temperature over 250°C, to recover a residue via line **27** and a distillate which is fed to fractionation column **29** via line **28.** A highly pure rosin acid stream is separated from column **29** via line **30.** Column **32** is fed via line **31** to produce a stream **33** comprising a fatty and rosin acid mixture essentially free of unsaponifiable matter; a stream **34** comprising highly pure fatty acids, mainly oleic and linoleic acids; and a stream **35** comprising highly pure fatty acids mainly palmitoleic acid.

The following examples show how the invention is carried out.

### Example 1

550 g of crude tall oil with an acid number of 146, an saponification index of 157 and an unsaponifiable matter content of 17.6% are saponified in a 2000-ml reactor, connected to a reflux condenser and with mechanical agitation, with 125 g of sodium hydroxide at 50% under reflux for two hours to generate saponified tall oil with a water content of 13.1%.

200 g of saponified tall oil are fed to the feeding funnel of a short path evaporator model UIC KDL-5. The temperature of the jacket of the feeding funnel is set at 110°C under agitation and inert atmosphere. The temperature of the evaporator jacket is set at 210°C; temperature of the condenser, 70°C; evaporator residue jacket, 240°C and operation pressure, 93.3 kPa (700mmHg).

Saponified tall oil is fed to the evaporator at 0.8 kg/h, and 172 g of first residue with a water content of 0.41% is recovered. A mixture of water and unsaponifiable matter with a non-volatile content of 9.1% is recovered in the distillate.

150 g of the first residue are fed to the feeding funnel of the short path evaporator model UIC KDL-5. The temperature of the jacket of the feeding funnel is set at 240°C under agitation and inert atmosphere. The temperature of the evaporator jacket is set at 280°C; temperature of the condenser, 140°C; evaporator residue jacket, 240°C; and operation pressure, 0.04 kPa (0.3 mmHg).

The first residue is fed to the evaporator at 0.2 kg/h, and 129.7 g of residue comprising refined saponified tall oil are recovered. 115 g of refined saponified tall oil are dissolved in 100 g of water in an agitated reactor at 50°C. The solution of refined saponified tall oil is acidulated with 100 g of an 18.5% aqueous solution of sulphuric acid at reflux for one hour. Then, the mixture is left to decant and is separated into two phases: a heavy aqueous phase or brine and a light oily phase, which is washed with water up to pH 5.

The oily phase is dehydrated in a rotavap until reaching a reduced pressure of 13.3 kPa (100 mmHg) and a thermostated bath temperature of 120°C, and 102 g of refined tall oil or RTO are recovered. Table 2 shows the characteristics ot the RTO obtained and the original CTO.

| | | |
|---|---|---|
| **Saponification index** | 157 | 186 |
| **Unsaponifiable matter percent** | 17.6 | 2.2 |
| **Fatty acid percent** | 34.1 | 49.1 |
| **Rosin acid percent** | 48.3 | 48.6 |
| **Gardner colour** | 13 | 9 |

### Example 2

2000 g of crude tall oil are processed according Example 1. 1236 g of refined tall oil are recovered.

900 g of refined tall oil are fed to a 2000-ml round flask connected to a 66-cm packed fractionation column with 3-mm aleatory Poropack packing and a distillation condenser head with reflux control.

Distillation is performed at a reduced pressure of 0.40 kPa (3 mmHg) and at a temperature of the reboiler between 200 and 370°C. Distillate is separated into five fractions analyzed through gas chromatography. The distillation objective is to generate a fraction 1 comprising fatty acids with less than 18 carbon atoms, a fraction 2 with fatty acids with 18 carbon atoms free of rosin acids, a fraction 3 comprising a mixture of fatty and rosin acids, a fraction 4 comprising rosin acids free of fatty acids and a fraction 5 or distillation residue.

Similarly, 900 g of crude tall oil are distilled under the same equipment configuration, operation and control conditions used in the distillation of refined tall oil in order to compare the products and the process performance of crude tall oil and refined tall oil.

Table 3 shows the comparative results of fractionated distillation of crude tall oil and refined tall oil.

As shown in Table 3, the fraction of fatty acids (Fraction 2) and the fraction of rosin acids (Fraction 4) obtained through the distillation of refined tall oil have better quality in comparison to the respective fractions obtained through the distillation of crude tall oil. Besides, a notable improvement can be observed in the organoleptic properties of the fractions obtained through the distillation of refined tall oil.

**Table 3: Characterization of distillation fractions from CTO and RTO**

| | **Crude tall oil** | **Refined tall oil** |
|---|---|---|
| **Fraction 1** | | |
| **Acid number** | 154.0 | 210.2 |
| **Unsaponifiable matter percent** | 27.0 | 0.6. |
| **Fatty acid percent** | 71.0 | 98.2 |
| **Rosin acid percent** | 0.0 | 0.0 |
| **Gardner colour** | 8 | 1 |

| **Fraction 2** | | |
|---|---|---|
| **Acid number** | 184.5 | 198.9 |
| **Unsaponifiable matter percent** | 7.2 | 0.3 |
| **Fatty acid percent** | 90.7 | 98.1 |
| **Rosin acid percent** | 2.2 | 1.3 |
| **Gardner colour** | 5 | 1 |

| **Fraction 3** | | |
|---|---|---|
| **Acid number** | 156.2 | 188.3 |
| **Unsaponifiable matter percent** | 18.4 | 0.5 |
| **Fatty acid percent** | 41.4 | 57.8 |
| **Rosin acid percent** | 40.2 | 40.3 |
| **Gardner colour** | 6 | 1 |

| **Fraction 4** | | |
|---|---|---|
| **Acid number** | 162.7 | 182.2 |
| **Unsaponifiable matter percent** | 12.6 | 0.4 |
| **Fatty acid percent** | 2.3 | 0.7 |
| **Rosin acid percent** | 85.1 | 98.2 |
| **Gardner colour** | 7 | 1 |

Figure 1 shows time and performance of distillation obtained from fractionated distillations of crude tall oil and refined tall oil.

As shown in Graph 1, the distillation of refined tall oil was carried out in half of the time required in the distillation of crude tall oil, which yields to a positive impact on the economy of the distillation process. Furthermore, recovery performance of fatty and rosin acid fractions from the distillation of refined tall oil is highly superior to the distillation of crude tall oil, having a positive impact on the process productivity.

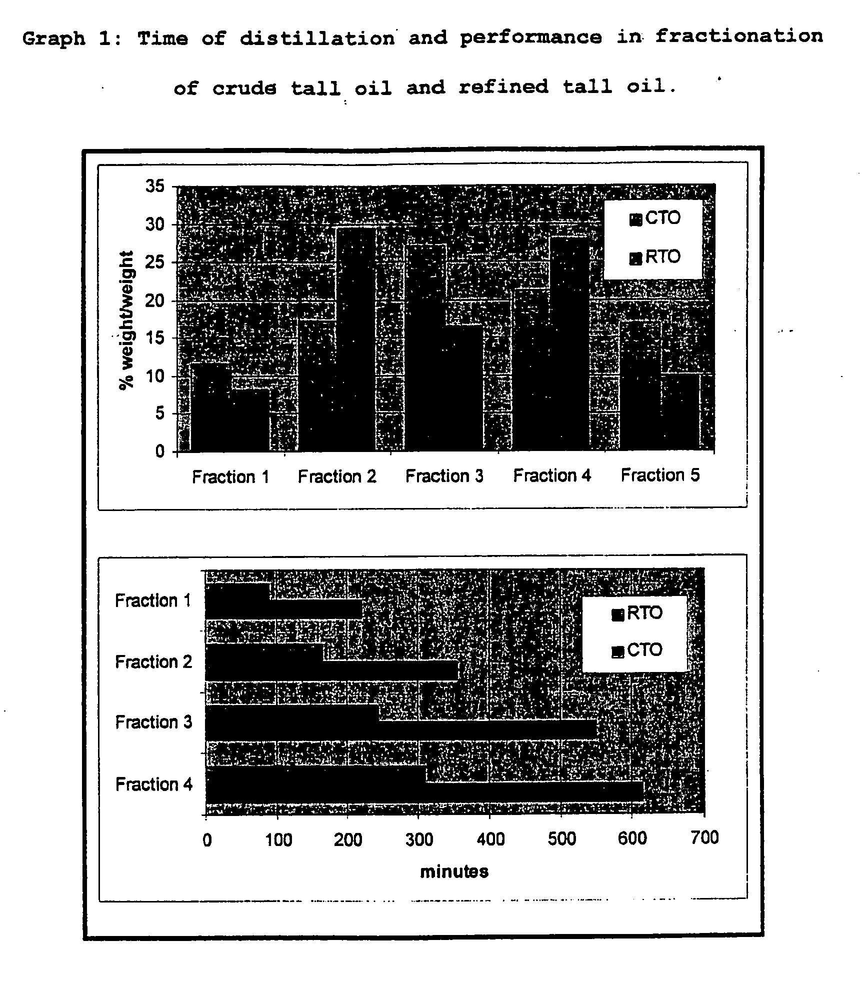

## Claims

1. A process for the production of fatty acids and rosin acids from crude tall oil, **characterised in that** the process comprises the following steps:
a) contacting crude tall oil with a saturated aqueous solution of sodium hydroxide or a saturated aqueous solution of potassium hydroxide in a agitated reactor at the temperature between 80 °C to 200 °C and pressure between 101 and 1518 kPa (1 to 15 atm) to produce saponified tall oil comprising at most 20% by weight of water;
b) dehydrating the saponified tall oil in a short path evaporator at a pressure between 20 kPa to 200 kPa and at a temperature of higher than 100 °C to produce a distillate comprising water and light unsaponifiable matter and a residue comprising dehydrated saponified tall comprising at most 3% by weight of water;
c) feeding the dehydrated saponified tall oil to a short path evaporator operating at a pressure of less than 0.13 kPa wherein the temperature of the evaporation surface is between 240 °C to 380 °C and the temperature of the condensation surface is between 70 °C to 180 °C, to produce a condensate comprising unsaponifiable matter and a residue of refined saponified tall oil free of unsaponifiable matter;
d) mixing the residue of step c) with water and a mineral acid to produce an aqueous phase and an oily phase and separating the oily phase from the aqueous phase;
e) dehydrating the separated oily phase at a temperature greater than 80 °C to produce a distillate comprising water and a residue of refined tall oil,
f) distilling the refined tall oil in a short path evaporator or thin film evaporator at a pressure of lower than 13.33 kPa (100 mmHg) and at a temperature of the evaporation surface between 160 °C and 300 °C and at a temperature of the condensation surface between 60 °C and 140 °C to form a mixture of fatty acids and rosin acids with an unsaponifiable matter percentage less than 2%.

2. The process of Claim 1, **characterised in that** in step a) the amount of sodium or potassium hydroxide is lower than 5% over the stoichiometric value.

3. The process of Claim 1, **characterised in that** the saponified tall oil in step a) comprises less than 15% by weight of water;

4. The process of Claim 1, **characterised in that** the residue of step b) comprises less than 1% by weight of water.

5. The process of Claim 1, **characterised in that** the mineral acid of step d) is sulphuric acid.

6. The process of Claim 1, **characterised in that** in step f) the pressure is less than 3.33 kPa (25 mmHg), the temperature of the evaporation surface is between 200 °C and 250 °C and the temperature of the condensation surface is between 80 °C and 120 °C.

## Patentansprüche

1. Verfahren zur Herstellung von Fettsäuren und Harzsäuren aus rohem Tallöl, **dadurch gekennzeichnet, dass** das Verfahren die folgenden Schritte umfasst:
a) In-Kontakt-Bringen von rohem Tallöl mit einer gesättigten wässrigen Natriumhydroxidlösung oder einer gesättigten wässrigen Kaliumhydroxidlösung in einem bewegten Reaktor bei einer Temperatur zwischen 80 °C und 200 °C und einem Druck zwischen 101 und 1518 kPa (1 bis 15 atm), um ein verseiftes Tallöl herzustellen, das höchstens 20 Gew.-% Wasser umfasst;
b) Dehydratisieren des verseiften Tallöls in einem Kurzwegverdampfer bei einem Druck zwischen 20 kPa und 200 kPa und bei einer Temperatur von höher als 100 °C, um ein Destillat, das Wasser und leichtes nicht-verseifbares Material umfasst, und einen Rückstand, der dehydratisiertes verseiftes Tallöl, das höchstens 3 Gew.-% Wasser umfasst, umfasst, herzustellen;
c) Zuführen des dehydratisierten verseiften Tallöls zu einem Kurzwegverdampfer, der bei einem Druck von weniger als 0,13 kPa arbeitet, wobei die Temperatur der Verdampfungsoberfläche zwischen 240 °C und 380 °C liegt und die Temperatur der Kondensationsoberfläche zwischen 70 °C und 180 °C liegt, um ein Kondensat, das nicht-verseifbares Material umfasst, und einen Rückstand von raffiniertem verseiftem Tallöl, das frei von nicht-verseifbarem Material ist, herzustellen;
d) Mischen des Rückstandes von Schritt c) mit Wasser und einer Mineralsäure, um eine wässrige Phase und eine ölige Phase herzustellen, und Trennen der öligen Phase von der wässrigen Phase;
e) Dehydratisieren der abgetrennten öligen Phase bei einer Temperatur von höher als 80 °C, um ein Destillat, das Wasser umfasst, und einen Rückstand von raffiniertem Tallöl herzustellen,
f) Destillieren des raffinieren Tallöls in einem Kurzwegverdampfer oder Dünnfilmverdampfer bei einem Druck von niedriger als 13,33 kPa (100 mmHg) und bei einer Temperatur der Verdampfungsoberfläche zwischen 160 °C und 300 °C und bei einer Temperatur der Kondensationsoberfläche zwischen 60 °C und 140 °C, um ein Gemisch aus Fettsäuren und Harzsäuren mit einem Prozentgehalt von nicht-verseifbarem Material von weniger als 2 % zu bilden.

2. Verfahren gemäß Anspruch 1, **dadurch gekennzeichnet, dass** in Schritt a) die Menge an Natrium- oder Kaliumhydroxid weniger als 5 % über dem stöchiometrischen Wert ist.

3. Verfahren gemäß Anspruch 1, **dadurch gekennzeichnet, dass** das verseifte Tallöl in Schritt a) weniger als 15 Gew.-% Wasser umfasst.

4. Verfahren gemäß Anspruch 1, **dadurch gekennzeichnet, dass** der Rückstand von Schritt b) weniger als 1 Gew.-% Wasser umfasst.

5. Verfahren gemäß Anspruch 1, **dadurch gekennzeichnet, dass** die Mineralsäure in Schritt d) Schwefelsäure ist.

6. Verfahren gemäß Anspruch 1, **dadurch gekennzeichnet, dass** in Schritt f) der Druck weniger als 3,33 kPa (25 mmHg) ist, die Temperatur der Verdampfungsoberfläche zwischen 200 °C und 250 °C liegt und die Temperatur der Kondensationsoberfläche zwischen 80 °C und 120 °C liegt.

## Revendications

1. Procédé pour la production d'acides gras et d'acides résiniques à partir de tallol brut, **caractérisé en ce que** le procédé comprend les étapes suivantes consistant à :
a) mettre en contact le tallol brut avec une solution aqueuse saturée d'hydroxyde de sodium ou une solution aqueuse saturée d'hydroxyde de potassium dans un réacteur sous agitation à une température comprise entre 80 °C et 200 °C et à une pression comprise entre 101 et 1518 kPa (1 à 15 atm) pour produire du tallol saponifié comprenant au maximum 20 % en poids d'eau ;
b) déshydrater le tallol saponifié dans un évaporateur à court trajet à une pression comprise entre 20 kPa et 200 kPa et à une température supérieure à 100 °C pour produire un distillat comprenant de l'eau et des matières insaponifiables légères et un résidu comprenant du tallol saponifié déshydraté comprenant au maximum 3 % en poids d'eau ;
c) acheminer le tallol saponifié déshydraté vers un évaporateur à court trajet fonctionnant à une pression inférieure à 0,13 kPa dans lequel la température de la surface d'évaporation est comprise entre 240 °C et 380 °C et la température de la surface de condensation est comprise entre 70 °C et 180 °C pour produire un condensat comprenant des matières insaponifiables et un résidu de tallol saponifié raffiné exempt de matières insaponifiables ;
d) mélanger le résidu de l'étape c) avec de l'eau et un acide minéral pour produire une phase aqueuse et une phase huileuse et séparer la phase huileuse de la phase aqueuse ;
e) déshydrater la phase huileuse séparée à une température supérieure à 80 °C pour produire un distillat comprenant de l'eau et un résidu de tallol raffiné,
f) distiller le tallol raffiné dans un évaporateur à court trajet ou dans un évaporateur à couche mince à une pression inférieure à 13,33 kPa (100 mmHg) et à une température de la surface d'évaporation comprise entre 160 °C et 300 °C et à une température de la surface de condensation comprise entre 60 °C et 140 °C pour former un mélange d'acides gras et d'acides résiniques avec un pourcentage de matières insaponifiables inférieur à 2 %.

2. Procédé selon la revendication 1, **caractérisé en ce qu'**à l'étape a), la quantité d'hydroxyde de sodium ou de potassium est inférieure à 5 % par rapport à la valeur stoechiométrique.

3. Procédé selon la revendication 1, **caractérisé en ce que** le tallol saponifié à l'étape a) comprend moins de 15 % en poids d'eau ;

4. Procédé selon la revendication 1, **caractérisé en ce que** le résidu de l'étape b) comprend moins de 1 % en poids d'eau.

5. Procédé selon la revendication 1, **caractérisé en ce que** l'acide minéral de l'étape d) est l'acide sulfurique.

6. Procédé selon la revendication 1, **caractérisé en ce qu'**à l'étape f) la pression est inférieure à 3,33 kPa (25 mmHg), la température de la surface d'évaporation est comprise entre 200 °C et 250 °C et la température de la surface de condensation est comprise entre 80 °C et 120 °C.
